(19)

Europäisches
Patentamt
European
Patent Office
Office européen
des brevets

(11) **EP 2 520 918 B1**

(12) **EUROPEAN PATENT SPECIFICATION**

(45) Date of publication and mention
of the grant of the patent:
**19.04.2017 Bulletin 2017/16**

(51) Int Cl.:
*G01L 9/00* (2006.01)          *G01L 9/12* (2006.01)
*G01L 19/00* (2006.01)          *G01L 27/00* (2006.01)

(21) Application number: **12165684.7**

(22) Date of filing: **26.04.2012**

(54) **MEMS capacitive pressure sensor, operating method and manufacturing method**

Kapazitativer MEMS-Drucksensor, Betriebsverfahren und Herstellungsverfahren

Capteur de pression capacitif MEMS, procédé de fonctionnement et procédé de fabrication

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.05.2011 EP 11164756**

(43) Date of publication of application:
**07.11.2012 Bulletin 2012/45**

(73) Proprietor: **ams International AG
8640 Rapperswil-Jona (CH)**

(72) Inventors:
• **Besling, Willem
5614 BA Eindhoven (NL)**
• **Reimann, Klaus
Redhill, Surrey RH1 1NY, (GB)**
• **Steeneken, Peter
Redhill, Surrey RH1 1NY, (GB)**
• **Wunnicke, Olaf
5654 PR Eindhoven (NL)**

• **Woltjer, Reinout
Redhill, Surrey RH1 1NY, (GB)**

(74) Representative: **Epping - Hermann - Fischer
Patentanwaltsgesellschaft mbH
Postfach 20 07 34
80007 München (DE)**

(56) References cited:
**EP-A1- 2 269 746          WO-A1-2011/015302
US-A1- 2002 011 114          US-A1- 2004 182 165
US-A1- 2007 068 266          US-A1- 2007 107 524
US-A1- 2007 169 557          US-A1- 2010 192 694**

• **DE BRUYKER D ET AL: "A combined
piezoresistive/capacitive pressure sensor with
self-test function based on thermal actuation",
SENSORS AND ACTUATORS A, ELSEVIER
SEQUOIA S.A., LAUSANNE, CH, vol. 66, no. 1-3,
1 April 1998 (1998-04-01), pages 70-75,
XP004143971, ISSN: 0924-4247, DOI:
10.1016/S0924-4247(97)01718-4**

EP 2 520 918 B1

**Description**

This invention relates to MEMS capacitive pressure sensors.

MEMS pressure sensors are well known, and typically have a piezoresistive or a capacitive read-out, to detect movement of a suspended structure when it is subjected to an external pressure. One example of known device uses a thin circular suspended SiN membrane, which is used within a capacitive MEMS pressure gauge.

The cavity underneath the SiN membrane is hermitically closed by means of a PECVD SiN process, for example using a 2 $\mu$m thick PECVD SiN film. The final device performance is largely determined by the physical, mechanical and structural properties of this film and the thickness necessary to close the sacrifical etch holes. The density and composition of this membrane determine the hermeticity, out-gassing behaviour, and internal stress. The stress together with the thickness determine the membrane rigidity and hence the sensitivity of the pressure sensor.

Critical systems in medical applications, alternative energy applications, smart buildings, engine control (e.g. gas and fuel inlet pressure), and automotive safety applications such as tyre monitoring systems, require pressure sensors that deliver accurate and predictable output over their lifetime in order to track changes in operation before those changes become critical. MEMS pressure sensors are now widely used in such applications.

With increasing miniaturization, MEMS pressure sensors also start to suffer performance issues. For instance, issues arise relating to insensitivity, inaccuracy and signal drift. Although state-of-the-art deposition tools and lithographic techniques are being employed, it is impossible to ensure that all MEMS devices are uniformly deposited or have identical geometries. Since no two MEMS devices are exactly the same, there has to be some means of calibrating them to cancel out those irregularities. As it is highly impractical to measure individual device parameters in an industrial fabrication environment (for example deflection profiles in relation to an externally applied force), it is important to develop methods for internal calibration to ensure that two MEMS devices function or measure in exactly the same way.

Self-calibration also is needed because the devices can be exposed to harsh environments or remain dormant for long periods. In some cases the device should wake up and recalibrate itself to account for changes resulting from temperature differences, changes in the gas or liquid ambient surroundings, or other conditions that might affect the properties.

Currently most MEMS pressure sensors use a hermetically sealed membrane that seals a reference cavity which is at a certain gauge pressure (in some cases the gauge pressure is a vacuum). The external pressure is measured because the pressure difference between the external pressure and the gauge pressure generates a force on the membrane, which causes the membrane to deflect. This deflection is then measured by piezoresistive, capacitive or optical sensors. There are several difficulties related to this conventional pressure sensor design.

For example, the gas pressure in the reference cavity needs to be very stable in order to avoid signal drift. This requires a very high level of hermeticity without out-gassing of the membrane.

However, in order to have a large deflection and optimum sensitivity, the thickness of the membrane should be thin (or it should have a large area). Since it is difficult to make very thin membranes hermetic, these are conflicting requirements and lead to a larger sensor size.

If the reference cavity is at a certain pressure, this pressure will be temperature dependent (according to Boyle's law). The sensor thus becomes temperature dependent. The sensitivity of the pressure sensor is determined by the amplitude of membrane deformation which is in turn defined by the thickness, diameter, and yield strength of the membrane. For a sensor with capacitive read-out, the sensitivity depends also on the distance of the plates becoming larger for higher pressures. The total dynamic range of deflection-based pressure sensors is also limited by the maximum deflection of the membrane.

It is clear therefore that any variation in membrane thickness, diameter, and stress has a significant impact on the resulting deflection profile of the membrane which affects not only the absolute capacitance reading but also accuracy and precision of the read-out. Due to process variations during fabrication, no two microstructures have the same geometric and material properties which will induce small variations in dimension, mass, stiffness that will significantly affect performance. For instance, a 10 % variation in membrane thickness can cause a 50%-100 % change in a microstructure's stiffness and pressure sensitivity if the membrane contains compressive and tensile layers. The actual dependence depends on the way the membrane is arranged to deflect. For instance, the thickness dependence for stress dominated membranes is proportional to the thickness whereas for bending stiffness dominated membranes it is proportional to thickness to the power of 3.

US2004/0182165 and US 2002/0011114 each disclose capacitive pressure sensors which connect to read out circuits.

According to the invention, there is provided a MEMS pressure sensor as claimed in claim 1.

The sensor of the invention uses vertical connections from a top metal layer of an underlying IC (such as a CMOS IC). This means the electrodes can be very symmetrical, for example annular. This arrangement enables multiple electrodes to connect to contact pads without requiring cross overs.

The connection portions can also provide interconnections to contact pads in the metal layer of the lower electrode arrangement with a second set of vertical vias.

A cavity is preferably defined between the electrode arrangements, and this can be a vacuum sealed cavity.

The use of one (or both) electrode arrangements as a segmented electrode enables a number of different modes of operation to be implemented.

For example, a differential capacitance read-out can be used. This differential capacitance measurement can be used in order to determine the deflection state of the pressure sensor (such as whether touch down has occurred, or to detect that the sensor is in a non-deflected state) independently from the absolute capacitance that is being measured. Variations in process conditions for example due to non-uniform membrane thickness will lead to a large spread in the deflection profiles and can thus be individually determined and calibrated for in circuit design.

In one example, the inner electrode is circular and the outer electrode is annular, and they have the same area. The inner circular electrode gives the largest deflection for a certain pressure variation and is hence ideally suited to improve sensitivity when used as the read out electrode. The matched areas mean that maximum sensitivity is obtained, wherein the capacitance change per surface area is maximal within a certain pressure range (the deflection amplitude and electrode distance determine sensitivity). For circular electrodes, this area matching occurs if the inner electrode radius is 7/10th and the outer electrode is 3/10th of the total radius of the membrane.

Means can be provided for applying a voltage bias to the inner or outer electrode, and the other electrode can then be used for capacitance measurement. One of the electrodes can be kept at a constant voltage creating an attractive force to correct for device variations, or small drifts in sensor performance or to boost the sensitivity.

In one example, a voltage bias is applied to the inner or outer electrode, and a feedback system is provided for maintaining a fixed ratio between the capacitance associated with the inner electrode and the outer electrode such as to maintain the suspended electrode arrangement in a flat configuration. This fixed ratio is 1 if the areas are the same but any ratio can be chosen depending on the required sensitivity. The voltage bias needed to maintain the suspended electrode flat can then be used to derive the pressure output of the sensor.

The means for deriving an output can be configurable to enable the output to be derived from any of:

the capacitance associated with the inner electrode alone;
the capacitance associated with the outer electrode alone;
the combined capacitances associated with the inner and outer electrodes.

This means that the capacitance used for read out can be selected for optimum sensitivity, best linearity, best signal to noise ratio, or best dynamic range (for example).

The invention also provides a method of fabricating a MEMS pressure sensor according to claim 7, comprising:

forming opposing electrode arrangements over an integrated circuit having a top metal interconnect layer" wherein a lower electrode arrangement is provided over the integrated circuit and the other is suspended over the top such that it is movable in response to an applied pressure,
wherein forming the lower electrode arrangement comprises forming an inner electrode and an outer electrode arranged around the inner electrode from the same metal layer,
forming a set of vertical vias which electrically connect the inner and outer electrodes to connection portions of the underlying top metal interconnect layer.

The method can include forming a second set of vertical vias which connect the connection portions to contact pads in the same metal layer of the lower electrode arrangement.

In one detailed example, the method comprises:

forming a lower metal layer over a substrate arrangement and defining the one electrode arrangement;
forming a sacrificial layer over the lower metal layer to define the cavity;
forming a passivation layer over the sacrificial layer;
forming a top metal layer and defining the other electrode arrangement, wherein the passivation layer avoids electrical contact between the lower metal layer and the top metal layer;
forming a capping layer over the top metal layer;
forming an etch opening in the capping layer leading to the sacrificial layer;
removing the sacrificial layer through the etch opening;
forming a plugging layer for plugging the etch opening; and
removing the plugging layer other than over the etch opening.

The etch opening can be formed laterally to the side of the electrode arrangements, and the plugging layer can be a metal formed by PVD.

Examples of the invention will now be described with reference to the accompanying drawings, in which:

Figure 1 shows the fraction of the area of a circular surface as a function of its radius;
Figure 2 shows the deflection (expressed as the cavity height) of a membrane at different points of the membrane;
Figure 3 shows the capacitance as function of radius;
Figure 4 shows the signal-to-noise ratio as a function of radius;
Figure 5 shows two examples of dual electrode design of the invention;
Figure 6 shows a three electrode design of the invention;
Figure 7 shows another electrode design of the invention;
Figure 8 shows another electrode design of the invention;
Figure 9 shows another electrode design of the invention;
Figure 10 shows the relation between the deflection of a circular membrane and the radius, for different pressure values;
Figure 11 shows the touch point pressure as function of membrane radius for different internal stress levels;
Figure 12 is a finite element simulation of the capacitance as function of applied pressure, showing transition behaviour between a non-linear and linear response region;
Figure 13 shows another three electrode design of the invention;
Figure 14 shows a first way to use voltage bias in a sensor of the invention;
Figure 15 shows a second way to use voltage bias in a sensor of the invention;
Figure 16 is used to explain a calibration procedure;
Figure 17 shows a bias voltage calibration and read-out method of the invention;
Figure 18 shows the device after some of the initial fabrication stages of a first example of manufacturing process;
Figure 19 shows the device after further fabrication stages;
Figure 20 shows the device after further fabrication stages;
Figure 21 shows the device after the final fabrication stages.
Figure 22 shows the device after some of the initial fabrication stages of a second example of manufacturing process;
Figure 23 shows the device after further fabrication stages;
Figure 24 shows the device after the final fabrication stages;
Figure 25 shows the device after the final fabrication stages of a third example of manufacturing process.

The invention provides a MEMS pressure sensor wherein at least one of the electrode arrangements comprises an inner electrode and an outer electrode arranged around the inner electrode. The capacitances associated with the inner electrode and the outer electrode are independently measured and can be differentially measured. This arrangement enables various different read out schemes to be implemented and also enables improved compensation for variations between devices or changes in device characteristics over time.

The invention makes use of different electrode areas. To understand the significance of different electrode areas at the centre and edge of the movable electrode arrangement, a geometrical analysis is useful.

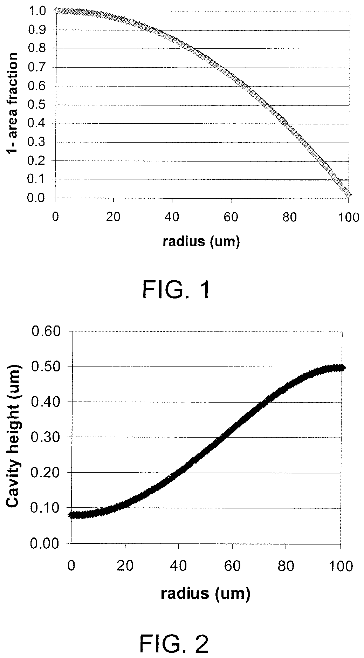

Figure 1 shows the fraction of the area of a circular surface as a function of its radius. For example, Figure 1 shows that the surface area of a donut-like ring with an inner radius of 90 um extending to an outer radius of 100 $\mu$m covers about 20% of the total surface compared to the surface of a complete circle with 100 $\mu$m radius. A solid circle covering the same surface area of 20% has a diameter of 45 $\mu$m. In order to obtain an equal surface area of an inner circle and an outer ring, the radius of the circle must be around 70 $\mu$m (more exactly 100/sqrt2) whereas the outer ring extends from 70 $\mu$m to 100 $\mu$m.

In Figure 2 the deflection (expressed as the cavity height) of a SiN membrane at different points of the membrane is shown at an externally applied uniform pressure of 100 kPa. The membrane is chosen to be 3 $\mu$m thick to make it sufficiently rigid. Nevertheless, the membrane is pushed almost to collapse (because the cavity height almost reaches zero in the centre, where radius =0) due to the pressure difference.

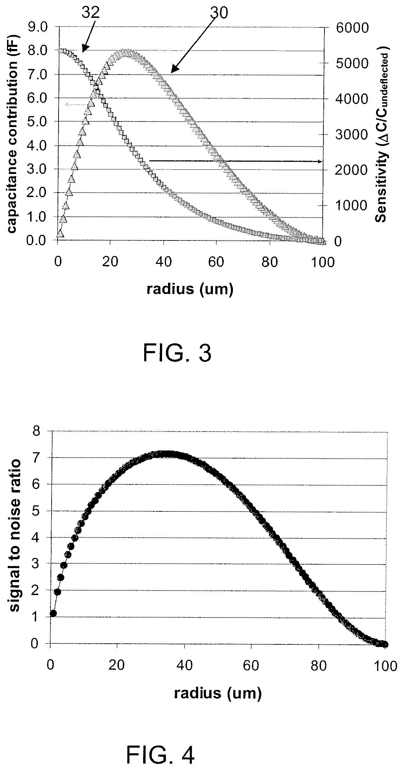

The capacitance as function of radius is shown in Figure 3 as plot 30, and it can be seen that the contribution to the total capacitance is low in the center of the membrane (because of the small area) although the capacitance per unit area is high due to the relatively small distance between the electrodes. Figure 3 shows the capacitance contribution per ring of 1 $\mu$m to the total capacitance for a 1 bar pressure difference. The contribution to the total capacitance increases quadratically with radius but gradually levels off due to the increasing distance between the plates. Depending on the deflection of the plate and the gap distance a maximum contribution is obtained at a distance between 20 $\mu$m and 50 $\mu$m from the center of the membrane.

Although the sensitivity of the membrane (plot 32) is the largest in the center of the membrane, the contribution to the total capacitance will be relatively small. The sensitivity is calculated as the capacitance difference between a deflected, 200 $\mu$m diameter SiN membrane (3 $\mu$m thick, 500 nm gap, Young's modulus 140 GPa, at 1 bar external pressure and zero cavity pressure) and a rigid plate (the same membrane at 0 bar external pressure).

Although it can be argued that it is beneficial to use the full membrane area to make the capacitance difference as large as possible, the relative increase will become very small at the edge of the membrane where the deflection will become zero. At the edge, the total capacitance increases quadratically with increasing distance from the edge without adding much to the capacitance difference due to the insignificant deflection of the membrane. This effect will have a significant impact on the signal-to-noise behaviour. For large capacitance values it will become more and more difficult to detect and filter-out small capacitance variations. Due to the fact that the membrane is not deflecting much near its edge, the ratio of the electrode diameter to membrane diameter can be optimized for maximum signal to noise ratio.

If the capacitance is read-out with an AC current, the signal is proportional to $\Delta I = \omega.\Delta C.U$ with carrier $I = \omega.C.U$, $\omega$ the charge-discharge frequency and U the applied voltage. The shot noise is proportional to $sqrt(2q.I.\Delta f)$ where q is the elementary charge and $\Delta f$ is the bandwidth.

The signal-to-noise ratio S/N is proportional to $\Delta C/sqrt(C)$. In Figure 4 the signal-to-noise ratio is plotted as a function of radius for a pressure change of 100 Pa at 1 bar absolute pressure, 100 Hz bandwidth and a charge-discharge frequency of 10 kHz.

The peak in the S/N value will shift to a larger radius at smaller pressures but the absolute value becomes much smaller due to a smaller deflection of the membrane. If it is assumed that the read-out electronics is not able to discern a signal (i.e. a capacitance change) from the electron shot noise with a S/N smaller than 2 then the outer 20 $\mu$m of the electrode can be removed without causing S/N problems.

A first use of the segmented electrode of the invention is to use an electrode with a smaller surface area than the membrane, in order to detect small pressure fluctuations. For large pressure changes the full membrane area can be used in order to capture as much as signal as possible. If a dual electrode configuration is used, there is the ability to select either the inner electrode for maximum signal to noise or both electrodes if the dynamic pressure range is large enough.

Several options for electrode configurations are given below.

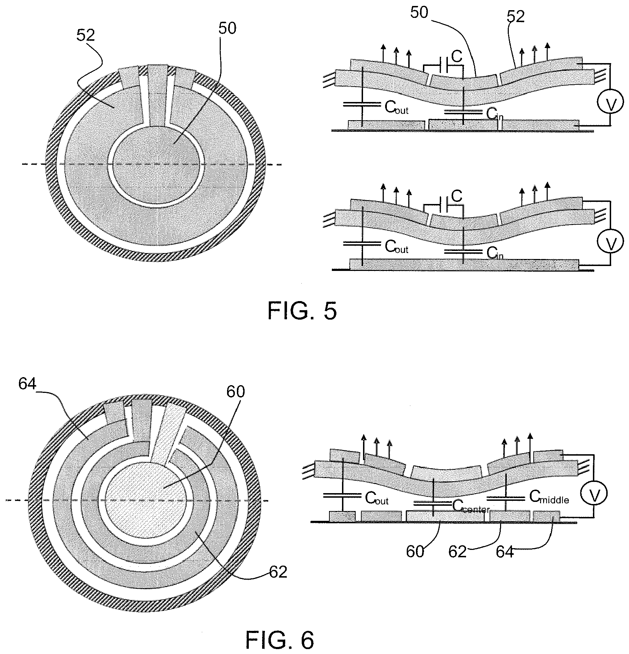

The most simple design, with a dual top electrode is shown in Figure 5. The top electrode layer has an inner circular electrode 50 and an annular outer electrode 52. The opposing bottom electrode can be continuous or segmented (to match the top electrodes) as shown in the two cross sections in Figure 5, which give alternative examples.

Although a dual electrode gives the largest capacitance per electrode, multi-segmented designs can be applied that can be used to optimize sensitivity in a very specific pressure range upon selecting the electrode of interest i.e. the one that shows the largest deflection in a certain pressure range.

Figure 6 shows a central circular electrode 60 and two concentric outer electrodes 62, 64, and shows in cross section the example with the segmentation of the top and bottom electrodes. The segmentation does not need to be the same on the top and bottom electrodes, and the top or bottom or both electrodes can be segmented.

Various capacitance measurement methods exist, which can be used to measure the multiple capacitances produced by the sensor, namely the capacitances Cout (capacitance associated with the outer electrode), Cin or Ccenter (capacitance associated with the central electrode) and Cmiddle (capacitcance associated with the middle of the three concentric electrodes in Figure 6),

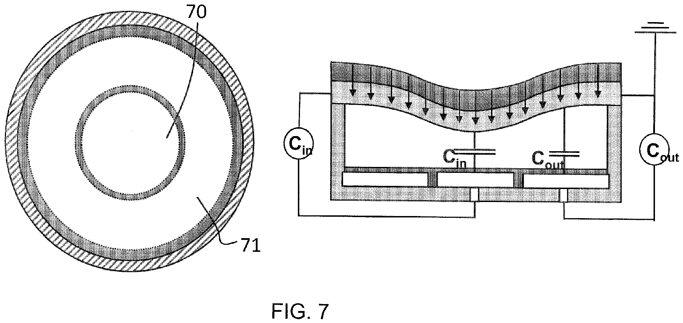

The segmentation can also be created in the bottom electrode layer alone as shown in Figure 7.. This has fully annular and circular bottom electrodes 70,71, and a grounded top electrode plate. Differential capacitance measurement is possible and independent actuation of the inner and/or outer electrodes with $V_{bias}$. EMI shielding is made possible by using the with outer electrode ring electrode and the grounded top electrode. In this way, the outer electrode can be used as a shield when only the inner electrode is being used for measurement. The direct capacitance between the two active electrodes is the capacitance of interest, and, when shielded leads are used, it is independent of the location of all other conductors except the shield.

When the outer electrode is used as shield, the influence of circuitry/signals around the sensor can be shielded from the two active electrodes that are opposite to each other. Although the shield will have a parasitic capacitance to the sensing electrode(s) this capacitance will be constant and known.

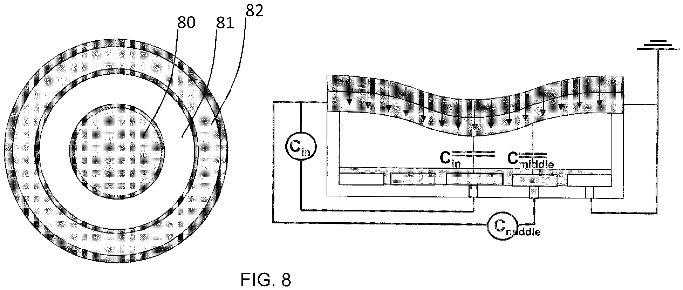

Figure 8 shows a modification to Figure 7 in which multiple concentric electrodes 80,81,82 as the bottom electrode.

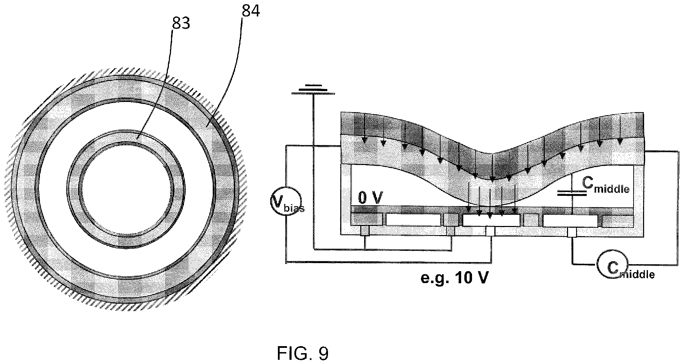

Figure 9 shows an arrangement with two bottom electrodes (a circular central electrode and an annular outer electrode) with an annular grounding shield 83 between them as well as an annular grounding shield 84 outside the annular outer electrode. These provide EMI shielding. Multiple annular electrodes can be provided for optimising the sensitivity tuning, around collapse, for example in the manner shown in Figure 6.

Most capacitance measurements involve simply a comparison of the capacitor to be measured with a capacitor of known value. This method can be applied to measure to capacitance ratio and for example find the zero deflection point of the membrane if identical electrode surfaces are being used (this is discussed further below). Such comparison can be performed frequently if one of the capacitors is substituted for the other at the same point in an electrical circuit.

Bridge comparison methods are very well suited to compare capacitors with high accuracy. Resistance-ratio bridges are Wheatstone-bridge configurations in which the potential division is measured of a variable capacitor and either a parallel combination of a standard loss-free capacitor Cs and a conductance Gs or a series combination of Cs and a resistor Rs. If these two parameters are equal to the ratio of potentials across two well defined resistors R1 and R2 the detector is nulled.

Time-constant methods rely on the measurement of the time constant of charge or discharge of a capacitor through a known resistor. If a voltage is applied in a step function fashion to a combination of an initially discharged capacitor and a resistor in series, the charge and the voltage on the capacitor increase exponentially toward their full magnitudes with a time constant equal in seconds to the product of the resistance in Ohms and the capacitance in farads. Similarly, when a charged capacitor is discharged through a resistor, the charge and the voltage decay with the same time constant. The time or frequency of such a charge-discharge cycle can easily be determined with standard methods.

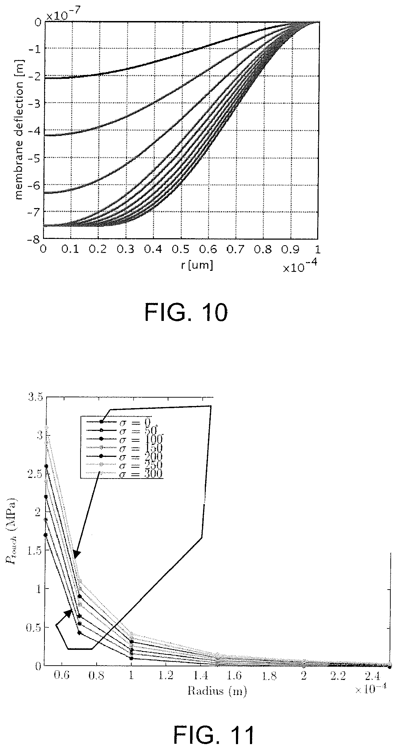

The diaphragm dimensions can be designed in order to set the pressure range. Figure 10 shows the relation between the deflection of a circular membrane and the radius, for different pressure values. The deflection of a circular membrane $w(r,P)$ in the flexural rigidity dominated regime as function of pressure P is given by

$$ w(r, P) = \frac{3Pa^4(1-v^2)}{16Eh^3}\left[1-\left(\frac{r}{a}\right)^2\right]^2 = \frac{Pa^4}{64D}\left[1-\left(\frac{r}{a}\right)^2\right]^2 $$

where a is the radius of the membrane and r the distance from the edge to the actual deflection point, v the Poisson ratio, E the Young's modulus and h the membrane thickness. As apparent from the relation above, the deflection scales with $R^4$ and $1/h^3$ showing the impact of small variations in size and or thickness on the defection profile. The flexural rigidity $D$ is determined by the membrane thickness $h$, the Poisson ratio $v$ and the Young's modulus $E$ as

$$ D = \frac{Eh^3}{12(1-v^2)} $$

The maximum plate deflection occurs at the center of the plate i.e. at r=0 and is given by:

$$ w_c = \frac{Pa^4}{64D} $$

Averaging the membrane deflection over the entire membrane area shows that the average membrane deflection equals 1/3 of the peak deflection:

$$ w_{avg} = \frac{\int_0^a 2\pi r w(r)dr}{\pi a^2} = \frac{Pa^4}{192D} = \frac{w_c}{3} $$

In Figure 10 the membrane deflection is calculated as function of pressure. The membrane deflection with respect to radial position is given for a 200 $\mu$m diameter SiN membrane with 1.5 $\mu$m thickness. The pressure is increased from 0.1 to 1 bar in 0.1 bar steps. The plot for 0.1 bar is at the top and successive lower plots represent increasing pressure. Membrane collapse (to -7.5 x $10^{-7}$m) occurs at 0.35 bar. The pressure inside the cavity is zero and no residual stress is assumed.

Thus, at a certain pressure, the top membrane will start to touch the bottom of the cavity. This relation is valid for films without any internal stress. If internal stress is taken into account the membrane becomes stiffer and the pressure to reach the touch point becomes larger. This is shown in Figure 11, which shows the touch point pressure as function of membrane radius for different internal stress levels (1.8 $\mu$m thick SiN membrane with Young's modulus of 140 MPa and gap height of 1.5 $\mu$m). As the internal stress increases from 0 to 300 MPa in steps of 50 MPa, the touch point pressure increases as shown.

The most convenient way to adjust the pressure range within a consolidated process flow is to adjust the membrane radius and not the membrane thickness, nor gap height, nor to fine tune the internal stress of the membrane. A realistic gap height from manufacturing point of view varies between 300 nm to 1000 nm. Smaller gaps will induce problems with the removal of the sacrificial layer especially if the membrane radius is large (long etch times are required which poses constraints on the selectivity of the etchants).

Large gaps are more costly to manufacture and create additional topography. Moreover, it will take a larger pressure to fully deflect a membrane to its touch point unless a thinner membrane is applied. The thickness of the membrane is typically chosen to be equal or larger than the gap distance to keep the device in the flexural rigidity controlled regime. This is beneficial because this reduces the impact of residual stress due to process variations on the deflection profile.

One purpose of the design of the invention is to increase the dynamic range of the pressure sensor. There are several known ways to improve the dynamic range of a pressure sensor:

A first approach is to use an array of pressure sensors with different membrane size. As the deflection scales with $1/R^4$ only small variations in membrane radius are required to cover a large pressure range, as can be seen from Figure 11. Although this approach is very convenient every individual membrane will have its own deflection profile and sensitivity which requires extensive individual calibration..

In one aspect, the invention provides an approach by which the dynamic range is increased by combining the non-linear capacitance to pressure ("C-P") response with the linear C-P response after collapse of the membrane.

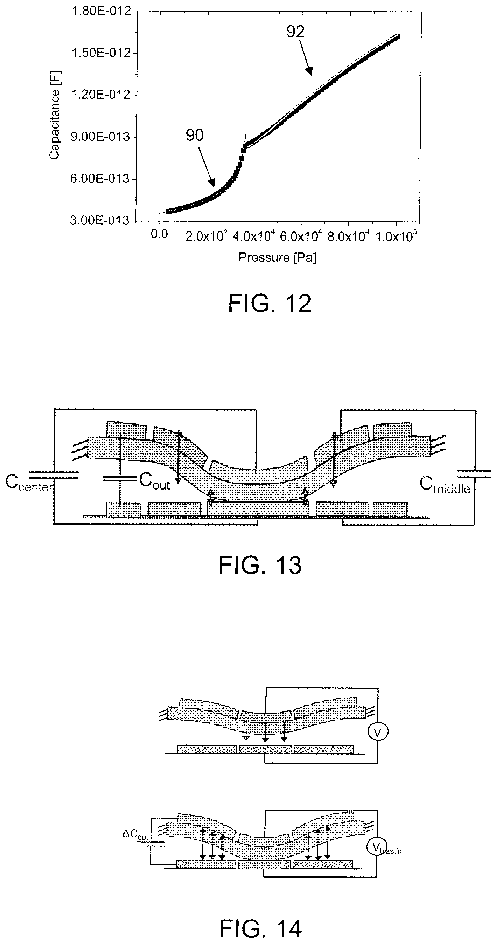

Figure 12 is a finite element simulation of the capacitance as function of applied pressure, showing this transition behaviour. Figure 12 shows the capacitance as function of applied external pressure for of a 100 $\mu$m radius SiN membrane of 1.5 $\mu$m thickness and 750 nm gap (Young's modulus 250 GPa, Poisson ratio 0.23). Between the electrodes is a 200 nm SiN dielectric layer with $\varepsilon r = 6$.

In a conventional pressure sensor, the touch point pressure will vary a lot depending on the geometrical dimensions and physical properties. It is, therefore, difficult to finetune the operation range of the sensor around the touch point in a reliable and predictable manner. From Figure 12, it is apparent that the sensitivity of the device is the largest just before touching the substrate. Due to the decreasing distance between the electrode plates, the capacitance increases nonlinearly with pressure up to the point where the top electrode touches the bottom of the cavity - this is part 90 of the plot. At pressures above the touch point pressure the capacitance shows a linear increase with pressure, as shown in part 92 of the plot.

The use of a segmented electrode allows accurate detection of the touch point pressure and the selection of an optimum electrode and/or electrode configuration to obtain an optimum sensitivity. This can be found in a calibration routine. Moreover, using multiple electrode rings it is possible to detect more accurately the touch point pressure.

By way of example, a segmented electrode design is shown in Figure 13, with three electrode segments on both plates. After touch down, the capacitance change of the inner electrode becomes linear whereas the middle ring enters the high sensitivity zone. The two signals thus become separated and can be used independently. This separation of the signal characteristics enables the touch down event to be detected, based on differential capacitance measurement. The middle ring electrode can be used to obtain a very sensitive output and the center electrode yields an almost linear capacitance - pressure relationship.

Thus, different electrodes can be used for different modes of operation, and these modes can be selected based on detection of the touch down event.

An array of pressure sensors of different diameter might be combined to increase the total sensitivity range and the dynamic range as well. In pressure sensors, the touch point pressure will vary according to small changes in process conditions or dimensional control. With un-segmented electrodes the sensor is typically operated either in the "non touching" or the "touching" state because in these regimes the C-P behaviour varies in a relatively predictable way. The multi segmented approach allows operation around the touch point pressure yielding a) a linear response of the inner electrode when in touchdown and b) a highly sensitive response of the next electrode.

The design of Figure 13 can thus be used to give a linear C-P response based on capacitance Ccenter, and a high pressure sensitivity response based on capacitance Cmiddle.

Differential capacitance measurement can also be used to find the zero deflection point, for example a differential capacitance of Cout with (Cmiddle + Ccenter) can be used to find the zero deflection point.

Another option enabled by the use of segmented electrodes is to actuate one of the electrodes with a bias voltage such that the center electrode is most close to its opposing electrode. This will enhance the sensitivity. Moreover, it can be used to calibrate the device. The membrane deflection is directly related to membrane size, thickness, and stress. Variations in process conditions could change from lot to lot and non-uniform membrane thickness could be deposited over each wafer leading to a certain spread in the deflection profile from die to die.

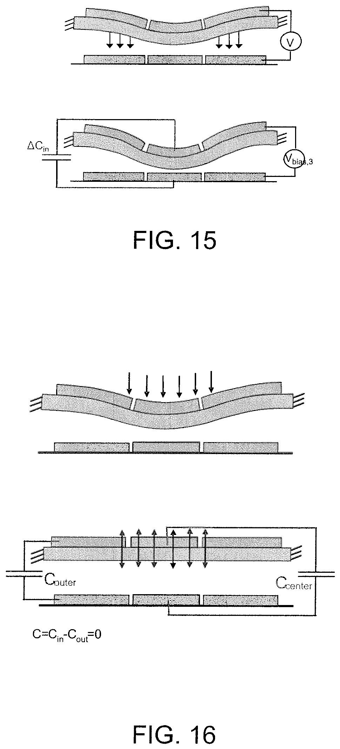

The bottom of Figure 14 shows the application of a bias voltage to the central electrode (of a two-electrode design) to cause touchdown as part of a calibration stage, for then deriving a (different) bias voltage during operation as shown in the top of Figure 14. The bias is applied to the central electrode and the capacitance measurement is based on the outer electrode. Figure 15 shows the same approach with the bias applied to the outer electrode and sensing based on the inner electrode.

The electrode design also enables calibration to compensate for potential signal drift. Signal drift can be caused by aging, membrane stiffening, grain growth within the metal electrodes, stress relaxation, temperature effects, out gassing within the membrane etc. A well known method for signal drift compensation is a differential read-out in which the variable capacitor is compared to a capacitor of constant value. The disadvantage is that it consumes extra space and that not all root causes of signal drift can be compensated for.

A differential read-out can compensate for a drift in external parasitic capacitances, for example if the sensor is put into a liquid and can't be fully Faraday-shielded. This will not prevent a drift in the mechanical zero-crossing for example caused by creep of the (Al) electrodes. Also, if out-gassing occurs into the cavity the membrane will experience an opposing force and will deflect less than in its initial state. Using a differential read-out in combination with a segmented electrode allows to determine reference deflection points to enable calibration to take place, in a way which is not possible with a conventional differential read-out using a comb-comb capacitor as reference.

For calibration purposes the differential capacitance of the two segmented electrode areas can be determined at a certain reference pressure or actuation voltage to see if there is a shift.

This approach is shown in Figure 16. The bottom part shows the application of a known reference pressure on one of the electrodes (the central electrode in this example) which is used to "zero" the sensor by finding the pressure for which the value of Couter = Ccenter.

A calibration process can involve applying several reference pressures to the membrane and measuring the capacitance. Correction parameters can be extracted from the measurements and stored in a memory on the chip or circuit elements can be trimmed. If this approach is combined with different membrane diameters, an even more accurate zero deflection state can be achieved. This latter approach only applies if the effective membrane properties are identical for different dimensions. In particular, identical thicknesses of the membranes need to be applied (and identical stress / Youngs' modulus) but this is in practice always the cause because there is very little variation in layer thickness or materials properties from die to die.

A calibration process provides a solution for potential signal drift.

For this purpose, it is important to determine the initial state and deflection behavior of the membrane in a calibration procedure and check from time to time whether any changes occur. If necessary the initial membrane deflection can be easily measured using a white light interferometer as an additional input parameter that can be stored in memory.

During a standard calibration, several reference pressures would be applied to the membrane and the capacitance would be measured. Correction and calibration parameters would be extracted from the measurements and stored in a memory on the chip or circuit elements would be trimmed. These calibration data can comprise of, for instance, Capacitance - Pressure (C-P) data points taken in the appropriate pressure sensing range. Typically three or more C-P points are needed to be able to derive a high order polynomial fit through the data points. As the C-P relation is non-linear (see formulas below) the more calibration points are available the more accurate the polynomial fit will be.

During initial calibration, the Capacitance -Pressure curve (C-P) is recorded over the pressure range of the calibration at room temperature and at 0 bias voltage.

A Capacitance - Temperature curve (C-T) is also recorded over the temperature range of interest at e.g. standard atmospheric conditions and at 0 bias voltage.

Now, for multiple pressure and temperature points the capacitance is known and can be fitted to a polynomial. This is a standard calibration procedure.

A problem is that if the sensor experiences drift or ages over time there is no way to detect such a change internally. Moreover, if such a detection method was available (e.g. by checking with another external sensor) there is currently no means available to recalibrate the sensor. One of the objects of this invention is thus to 1) supply means to detect a such a performance/sensitivity change by the sensor itself, 2) supply means to perform an auto calibration and 3) reprogram the chip with these new set points.

If only this "standard calibration" is performed and the calibration curve is programmed in the chip as a polynomial fit of the C-P and C-T data points no further intelligence can be extracted and correction of the fitted curves becomes cumbersome when the device is in operation.

A first aspect of the calibration method of the invention is to apply a Capacitance -Voltage (C-V) sweep as part of the initial calibration. The capacitance as function of voltage is then known for a particular pressure and temperature.

The Capacitance Voltage (C-V) sweep comprises accurate capacitance measurements under different bias voltages. Typically a C-V curve is taken between +20 V and -20 V with a step size of 1 V. Due to the attractive electrostatic force the membrane deflects towards the other electrode with increasing voltage bias (either negative or positive) thereby increasing the capacitance.

A fit though the C-V data can be used to derive the membrane compliance which is a measure for the pressure sensitivity of the membrane. The C-V calibration method is a relatively quick calibration method which can be even performed on wafer level without using dedicated pressure chambers. The main advantage is that the method is quick and low-cost because the gathering of multiple C-P calibration data points can be avoided.

The C-V sweep method not only provides additional calibration possibilities during manufacturing or after packaging but also during operation of the device.

A second aspect of the calibration method of the invention is to apply a Capacitance-frequency (C-f) sweep at a certain bias voltage. The resonance frequency is then known at that particular pressure, temperature, and bias voltage. The addition of the C-V and C-f sweeps as part of the initial calibration allows to derive specific parameters that describe the membrane compliance in addition to the membrane compliance data that can be extracted from the C-P and C-T curves.

One of the membrane parameters is for instance the collapse pressure and the collapse voltage, i.e. respectively the pressure and the bias voltage at which the membrane touches the bottom of the membrane. Using a segmented electrode allows to measure and detect more accurately the collapse pressure and the collapse voltage.

If the outside pressure is changed (and/or the temperature) the membrane will react to the changing force that is exerted on the membrane: e.g. it will deflect further with increasing pressure (or with increasing temperature if the thermal expansion of the membrane is larger than that of the substrate). Due to the higher deflection state of the membrane the C-V curve will be slightly different due to the smaller distance between the membrane and the bottom electrode: the capacitance will now be larger for the same voltage due to the larger attractive force of the membrane. If for some reason gas accumulates in the cavity (e.g. due to outgassing of the membrane) an opposing force arises to the externally applied pressure. The membrane deflection becomes less for the same externally applied pressure. This results in a reduction of the capacitance. The problem is that the device read-out does not know and according to the calibration curve a lower absolute pressure is being displayed.

Another aspect of the calibration method is that during use (i.e. after initial calibration) further C-V and/or C-f measurements (but not full sweeps) can be performed. These function as a sensor drift check.

If the C-f method is being used, the membrane is brought into resonance with an alternating bias voltage at or around the resonance frequency. Any change in membrane compliance (i.e. any change in membrane stiffness due to e.g. aging or any change in membrane damping e.g. due to outgassing) can be verified comparing the resonance and quality factor data stored in memory for a certain pressure/temperature condition. If the resonance frequency and/or the damping of the membrane has changed one can conclude that the sensor has been subject to changes in its spring constant (k) and or changes to its mass (m). If such a shift is detected the sensor either needs replacement or recalibration.

If the C-V method is being used, the capacitance is measured as function of bias voltage. The C-V curve can be compared and verified with the C-V data stored in memory for a certain pressure/temperature condition. If such a shift is detected the sensor either needs replacement or recalibration. An important point is the voltage that is required to pull the membrane into collapse. If there is a change in membrane compliance (i.e. any change in membrane stiffness due to e.g. aging or any change in membrane damping e.g. due to outgassing) the required electrostatic force needed for pull-in (bias voltage over one of the segmented electrodes) will be different for the same deflection state (i.e. measured capacitance). So in order to make this comparison multiple data points i.e. capacitance values need to be measured as function of bias voltage for different pressure set points over the pressure calibration range.

This sensor drift check provides a way to find autonomously whether a device is drifting, and requires recalibration. So a quick check can be made measuring at a certain predefined voltage without doing a full C-V and C-f sweep. A quick check saves time and power. Performing a full recalibration will indeed flag that the sensor is not delivering the right values. Starting a recalibration procedure rewrites the information stored in memory whereas a C-V check doesn't.

In use (i.e. after all the initial calibration steps), the capacitive input of the pressure sensor is used to make a first estimation of the externally applied pressure using the calibration data in memory (C-P and/or C-V). As explained above, in the calibration procedure the externally applied pressure is stored in memory as function of two different externally applied forces (i.e. pressure and an electrostatic force). The C-V sweep during calibration is carried out at a well defined, externally applied pressure. During operation of the device a capacitance value is measured without exactly knowing whether the membrane compliance i.e. membrane stiffness and or the internal cavity pressure has changed. Performing a C-V sweep during operation gives information on the change in membrane compliance and allows to decorrelate the C-P behavior from the C-V behavior.

In order to extract the C(P) dependence from the membrane deflection i.e. the *w(r,P)* expression, the following integral must be solved:

$$C(P) = \int_0^R \frac{\varepsilon_0 \varepsilon_r}{\varepsilon_r (g - w(r,P)) + h_{\text{dielectric}}} 2\pi r dr \qquad (1)$$

The deflection profile *w(r,P)* can be described as the product of the central deflection $w_0(P)$ times the profile *z(r)* which is a function of the radius. *z(r)* depends on the material properties of the membrane: a bending-dominated membrane and a stress-dominated membrane have different profiles *z(r)*. For a bending-dominated deflection profile:

$$z(r) = \left(1 - \frac{r^2}{R^2}\right)^2$$

The membrane-center deflection $w_0(P)$ is reasonably well described by [Timoshenko, Theory of plates and shells, p.392] and depends linearly with pressure P:

$$w_0(P) = \frac{0.23R^4\left(1 - v^2\right)}{1.22Eh^3 + \sigma hR^2\left(1 - v^2\right)} P$$

for stress-free as well as for stressed circular, clamped plates, as long as the stress is above (i.e. less compressive than):

$$\sigma_{\mathrm{crit}} = \frac{-1.22Eh^2}{R^2\left(1 - v^2\right)}$$

The touch down or collapse pressure $P_{\mathrm{coll}}$ can be found via $w_0(P_{\mathrm{coll}}) = g$. Hence,

$$P_{\mathrm{coll}} = \frac{gh\left(1.22Eh^2 + \sigma R^2\left(1 - v^2\right)\right)}{0.23R^4\left(1 - v^2\right)}$$

As explained above, the standard calibration enables any measured capacitance to be linked to an external pressure at 0 bias voltage using e.g. a polynomial fit of the C-P calibration points. However, if an error/drift occurs it is not possible to correct the polynomial fit and perform a recalibration without using externally supplied pressure points. The analysis above shows that instead of using a calibration table or polynomial fit to the C-P data, an analytical deflection model can be used that comprises physical parameters. Some of these parameters will not change over time as they are well defined by lithography and deposition conditions. These parameters are: diameter of the membrane, thickness of the membrane, gap height, geometrical dimensions (surface areas) of the segmented electrode(s), thermal expansion coefficient, mass/density of the membrane, dielectric constant of the isolating layers, and Poisson ratio. Parameters that could/do shift over time (and change the membrane compliance or damping) are stress, Young's modulus, additional damping mass on the membrane, increasing internal gas pressure. The collapse pressure turns out to be related to all variables that could change over time.

The deflection of the plate in the center, wc, is equal to the gap height at Pcollapse. E.g. for a bending (Young's modulus) dominated deflection profile one can write (D is flexural rigidity):

$$w_c = \frac{Pa^4}{64D} \qquad \text{or} \qquad g = \frac{P_{coll}a^4}{64D}$$

For an effective gap height, g', the following relation can be derived taking into account the height, $h_{diel}$, and permittivity of the dielectric material in between the electrodes $\varepsilon_r$ and the actual gap or cavity height *g*:

$$g' = g + \frac{h_{\mathrm{diel}}}{\varepsilon_{\mathrm{r}}}$$

The capacitance as a function of center deflection $w_0$ is then:

$$C(w_0) = \frac{C_0}{2x}\ln\left(\frac{1+x}{1-x}\right) \quad \text{with} \quad x \equiv \sqrt{\frac{w_0}{g'}} \quad \text{and} \quad C_0 \equiv \frac{\varepsilon_0 \pi R^2}{g'}$$

The center deflection is a function of pressure and defined by the gap distance and the collapse pressure $P_{coll}$ i.e. the pressure at which the center of the membrane touches the bottom of the cavity:

$$w_0(P) = \frac{g}{P_{coll}} P$$

The capacitance as a function of $P$ can thus be described by the following formula:

$$C(P) = \frac{C_0}{2y}\ln\left(\frac{1+y}{1-y}\right) \quad \text{with} \quad y \equiv \sqrt{\frac{gP}{g'P_{coll}}}$$

The analysis above shows that if the collapse pressure can be determined accurately, it is possible to adjust the C-P curve even without taking new C-P calibration data points. Instead of using a high order polynomial C-P fit the mathematical formula above is used to determine a capacitance value for a given pressure value.

The pressure sensitivity which is the derivative $dC/dP$, can be written as:

$$\frac{dC}{dP} = C_0 \frac{g/g'}{4P_{coll}}\left\{\frac{2y - (1-y^2)\ln\left[\frac{1+y}{1-y}\right]}{y^3(1-y^2)}\right\}$$

If there is some variation in the membrane thickness within wafer (WIW) or from wafer to wafer (WTW) the deflection profile and hence the capacitance will vary slightly for the same applied external pressure. By applying a voltage bias creating an electrostatic force, the deflection profiles of all pressure sensors can be set individually. Moreover, in performing a C-V sweep the mechanical compliance of the membrane can be determined giving information on the deflection profile if a uniform hydrostatic pressure is applied.

The attractive force between two opposing plates due to an electrostatic force depends quadratically on their respective distance. This implies that a membrane which is already deformed by a uniformly applied force such as pressure, is not uniformly attracted by the electrostatic force. The following relation can be derived for an electrostatic force that is acting on the top electrode for each segment in the bottom electrode:

$$F_i = \frac{\varepsilon_0 V_{dc}^2 S}{2g_i^2}$$

Where $V_{dc}$ is the applied DC voltage between the two electrodes, $S$ and $g_i$ are the area and the effective gap height of the $i^{th}$ capacitor, respectively. This method of segmentation allows to select a single or a set of electrostatic forces that can be used to determine the deflection profile of the membrane (i.e. capacitance of a segment).

The electrostatic force that is required for pulling the membrane into collapse is linked to a mechanical restoring force of the membrane. Upon assuming a piston-like motion of the diaphragm a general expression can be derived that pull-in occurs when the center deflection of the membrane reaches 1/3 of the initial air gap between the electrodes. For a circular clamped membrane without any external force (i.e. uniform pressure load) the pull in point occurs when the membrane deflection equals 46% of the gap height. This latter value is derived from numerically solving the following equations. For a membrane with an additional uniform load the following expression holds:

$$\frac{w_{pull-in}}{g_0} \approx 0.46 \cdot (1 + 3.55 \frac{F_{ambient} / k_1}{g_0})$$

The collapse pressure can now be linked to the voltage that is required for pulling the membrane into collapse:

$$V_{pull-in} = \sqrt{\frac{2(k_1 w_{pull-in} - F_{ambient})}{C'(w_{pull-in})}}$$

In this way an initial deflection profile (set point for a desired gap spacing) can be individually corrected for by applying a bias, but also the sensitivity (mechanical compliance of the membrane) can be tuned. Even a change in capacitance (i.e. deflection profile) due to thermal expansion of the membrane caused by temperature variations can be corrected for.

The individual values of the bias voltages should be stored in memory.

The bias voltage that must be applied are chosen such that the capacitance corresponds to a value stored in memory.

During manufacture, process variations have to be taken into account. During factory calibration, the individual sensor performance must be determined as accurately as possible with a minimum of calibration points in order to reduce costs. During sensor operation, signal drift must be detected first (if the sensor read-out changes it may be due to a real pressure variation or due to other factors) and secondly there should be a way to correct for this signal drift.

An improved auto-calibration approach is enabled by the invention, which again involves applying an electrostatic force by biasing one electrode at a voltage. Since the electrode area and the distance of the plates are well defined during processing, the electrostatic pressure is also well defined. For example, if the plate distance (i.e. gap between the membrane and the substrate) or the curvature of the membrane (influence of stress gradient) is not well-defined during production, then the electrostatic pressure can be calibrated during production in the same way as a standard calibration. The advantage is that the auto-calibration procedure via the electrostatic pressure can compensate for temperature shifts directly. If these parameters are well controlled, then the calibration procedure can be simplified with less reference pressures (or even only ambient pressure as reference pressure).

The resonance frequency of the membrane could also be measured and from that the mechanical compliance can be deduced. This is particularly suitable for use in gases or well known liquids. An oscillator can be built that locks to the resonance. The oscillating signal can at the same time be used to sense the capacitance of the sensor and hence the pressure.

For a sensor with a circular plate an equivalent spring constant, mass, and damping coefficient can be derived that accurately capture the membrane's mechanical properties. To calculate these parameters, a uniform pressure P is assumed to deflect the membrane. The pressure P includes the electrical force, $F_e$, resulting from a voltage applied to the segmented electrode and the force from the external pressure, Po.

$$P = P_0 + \frac{F_e}{\pi a^2}$$

It is assumed that the function given by (1) for a uniform pressure P holds for all stable deflections despite the non-uniformity of the electrical force, the electrical force being strongest at the membrane's center, This assumption simplifies deriving equivalent mechanical parameters and accurately predicts the membrane displacement due to an applied voltage. For deflections that are relatively small compared to the membrane's thickness the plate displacement is proportional and linearly to the applied force. The average membrane deflection can now be expressed in terms of a linear spring constant $k_1$.

$$w_{avg} = P_0 \frac{a^4}{192D} = F_e \frac{a^2}{192\pi D} = \frac{1}{k_1} F_e$$

$$k_1 = \frac{192\pi D}{a^2}$$

The resonance frequency $\omega_0$ depends on the spring constant and the effective mass of the membrane $m$:

$$\omega_0 = \sqrt{\frac{k_1}{m}} = \frac{10.22}{a^2 \sqrt{\rho h / D}}$$

Any change in the resonance frequency can thus be expressed as a change in the flexural rigidity $D$ of the membrane. The C-P curve can now be corrected for this change.

The equation above demonstrates that a C-f sweep enables a mechanical compliance to be derived, The mechanical compliance/resonance frequency depends on two contributing factors: the spring constant and the mass which can also be expressed as the flexural rigidity of the membrane D. This value can be used to correct for the collapse pressure

In summary, the calibration method comprises:

during a calibration phase, carrying out conventional device characterisation in the form of a C-P and C-T analysis; additionally carrying out C-V, and/or C-f analysis as part of the initial calibration. This can be for single and or multiple pairs of electrode segments. All the initial calibration information is stored in memory;
(optionally) during use of the device performing a quick sensor drift check using C-V or C-f measurements;
during use of the device, periodically carrying out a recalibration comprising:

- performing a C-V sweep;
- from this C-V sweep determining the collapse pressure. This value is then used in the C-P model (see above);
- performing a C-f sweep; and
- from this C-f sweep a mechanical compliance is derived; and
- obtaining a pressure value from the measured capacitance.

The pressure is derived from an analytic model that comprises fixed physical material parameters and modifiable material parameters. These parameters can be changed using C-V, C-f (and eventually also C-T and C-P) measurements.

The object of the calibration aspect of the invention is to determine all the correct parameters that describe membrane deflection as function of pressure and capacitance. If the membrane deflection characteristics are known, the capacitance can be calculated for a particular electrode segment using an analytical model. The C-V and C-f measurements allow to determine independently the main parameters in the deflection model i.e. the collapse pressure (from the collapse voltage) and the collapse pressure from the resonance frequency giving the value for the flexural rigidity D and hence the value of P collapse. When a capacitance is measured, it is then possible to calculate the absolute distance between the electrode plates and the pressure that is required to reach this state.

The C-V calibration method is not solely applicable to the multi-segmented electrode design described. It can also be applied to non-segmented electrodes. However, this has some drawbacks with respect to the stability of the read-out circuitry for the capacitive sensor especially if large DC Vbias is required. It is certainly advantageous to have the actuation of the membrane by a DC voltage separated from the read-out circuit. This can be done using, for instance, by applying a Vbias on the outer bottom electrode and performing the capacitive measurement between the inner bottom electrode and the top electrode.

In some embodiments of the multi-segmented electrode design an increasing pressure can be applied during calibration. Using multiple electrode segments the collapse pressure can be easily detected. For example, if a small circular bottom electrode is used the capacitance will not change further (it becomes constant) with increasing pressure when the membrane /electrode starts touching the bottom of the cavity. The same information can be obtained by using an increasing voltage during calibration - this voltage can be applied to a bottom electrode that is lying circumferentially around the inner circular electrode. The touchdown pressure can then be linked to the voltage that is required for collapse.

The segmented electrodes also allow new read out schemes.

Upon using thin membranes with sufficiently large membranes (e.g. 1000-2000 nm thick, 100-200$\mu$m diameter) actuation voltages of about 10-20 V are needed to pull the membrane into collapse. In order to force the membrane into a certain deflected condition (e.g. half way the into the gap) this will require a large voltage difference between the electrodes at low pressures whereas a small electrostatic force is required if the pressure is large (and the membrane already has attained the desired deflection state).

If using thick membranes that are relatively small (e.g. 2-3 $\mu$m thick, 50-75 $\mu$m diameter), much higher actuation voltages are needed pull the membrane into collapse (e.g. 50 -100 V). These types of membranes have a high flexural rigidity and are typically used if the pressure difference between the cavity and the outside environment is large (e.g. >1 bar). These kinds of high voltages are not very practical from electrical breakdown and isolation point of view, as well as the requirement of voltage up-conversion using DC-DC converter due to low supply voltages, and the use of more expensive, high voltage, non standard CMOS technologies. However, the segmented electrode approach allows an improvement to the signal to noise ratio and allows an internal calibration based on a differential capacitance measurement.

If the external pressure is lower than the pressure in the cavity (e.g. respectively vacuum and 100 mbar internal pressure) the membrane will have a domed shape (for example as shown at the top of Figure 14). A compensation circuit can be programmed in such a way that the outer electrode capacitance is the inner electrode capacitance + an additional value, X to make the ratio between the inner and the outer electrode a predefined value e.g. 1. This avoids the need for voltage actuation to make the membrane flat. The value X can be for example a switched capacitor bank, or else the approach can be implemented in software. The additional capacitance X is then a measure for the internal cavity pressure e.g. caused by out-gassing.

Another embodiment is to use an active feed-back loop and keep the ratio of the capacitance constant by applying an bias voltage. The advantage is a very linear output as the membrane deflection remains constant. On the other hand a high voltage generator and more circuitry is required, and could cause shorter lifetime due to continuous voltage stress.

An advantage of using the segmented electrode is the ability to detect small capacitance differences between the inner and outer electrode. As the outer electrode only contributes marginally to changes in capacitance this electrode is preferably used for actuation whereas the inner electrode should be used to measure very accurately the capacitance.

Although the capacitance change of the outer electrode is marginal upon actuation, the outer electrode can be used to pull in the membrane to make the inner electrode approach the bottom electrode. Thus, applying a bias to the outer electrode will increase the sensitivity to small pressure variations significantly. The DC voltage bias on the outer electrode creates an off-set to the capacitance measurement which is independent of the applied pressure and can be used to characterize/calibrate the sensor even further.

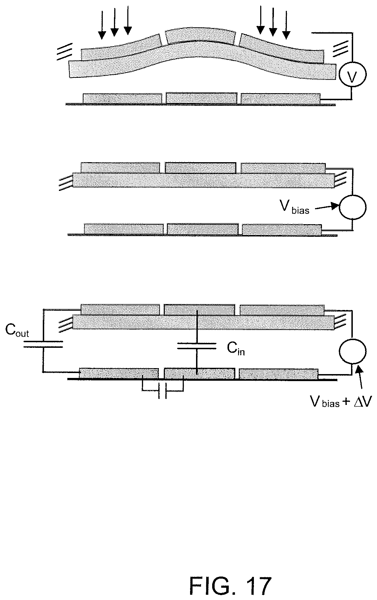

Figure 17 shows this bias voltage calibration and read-out method.

The top part shows the application of an actuation voltage, to pull the membrane in from an initial domed shape to a flat shape. Note that applied pressure levels can be used to lift the membrane to a flat shape (since actuation voltages can only be used to pull the membrane in).

The middle part shows the application of a bias reference voltage, sufficient that the membrane will be forced to its un-deflected state. A reference pressure is applied during this calibration stage. This bias voltage can be determined based on the differential capacitance becoming close to zero between the inner and outer electrodes if they have equal surface area. As mentioned above, instead of achieving this by actuating one of the electrodes using an electrostatic force, it can be achieved during the calibration phase by varying the pressure difference between the cavity and the outside environment. If a reference pressure is available the device can be calibrated using this differential capacitance measurement method.

In use of the device, an applied pressure will result in a voltage change that is required to keep the differential capacitance zero. Thus, by using a feedback system to keep the membrane flat, the required actuation voltage (above the bias voltage determined in calibration) can be used to give the pressure measurement.

The state of deflection can be characterized by three methods:

a) a capacitance measurement as function of pressure (for example as explained with reference to Figures 5 to 16)

b) a DC voltage bias on one of the electrodes creating an off-set to the capacitance measurement as function of pressure (as explained with reference to Figure 17)

c) determination of resonance frequency and quality factor of an electrostatic excited membrane. The resonance frequency can be determined by measuring the electrical impedance between both actuation electrodes as a function of frequency while applying a DC bias voltage, Vdc, across the membrane. The membrane is thus excited by the electrostatic force and its motion is detected by measuring the capacitive current, which is a result of the fact that the capacitance between the opposite electrodes is a function of the distance z0+$\Delta$z. Alternatively the device can be configured in a feedback loop with an amplifier to create a MEMS oscillator, which continuously generates an AC output signal with a frequency which depends on the external pressure. The frequency of the output signal is a measure for the pressure.

The frequency can then be determined using any conventional way of measuring resonance frequencies of MEMS, mechanical resonators, or RLC circuits.

This method of measuring resonance frequency is known in the field of MEMS resonators, but it is quite difficult to determine the quality factor and the resonance peak frequency at elevated pressures due to peak broadening.

The invention enables an independent capacitance measurement of one electrode as function of time while actuating the other electrode. This yields a more sensitive determination of the resonance frequency and its amplitude because the central part of the membrane is more sensitive to variations in capacitance due to larger deflection amplitudes than the outer part.

The pressure sensor can be fabricated using standard technologies.

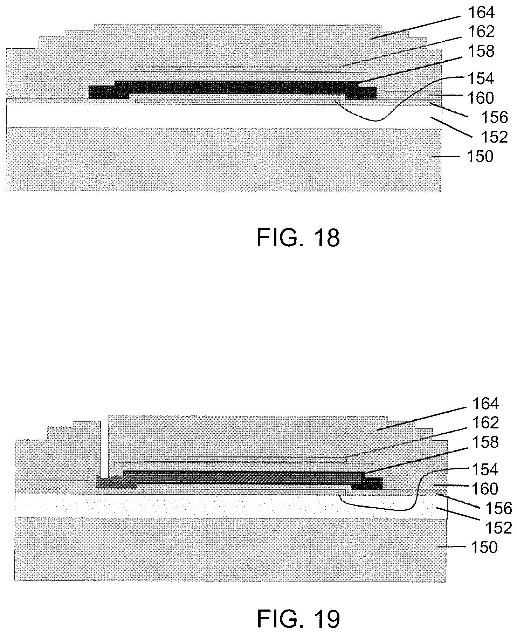

Figure 18 shows the device after some of the initial fabrication stages.

The device is formed on a substrate 150 which can be a plain isolating layer 152 of silicon oxide or silicon nitride on a bare silicon wafer 150 as shown, or an isolating layer on top of a CMOS wafer with integrated electronic circuitry underneath. A bottom metal electrode 154 is deposited (typically 200nm thick PVD Al) and subsequently patterned.

An isolating silicon nitride or silicon oxide film 156 (for example 100nm of silicon nitride) is deposited on top of the metal electrode by means of PECVD or LPCVD. This is followed by the deposition of a sacrificial layer 158 which will be removed later on to form a cavity: The sacrificial layer consists of a 300-500 nm thick metallic layer (typically Mo, Al or Cr). This layer is patterned in an appropriate circular shape with flaps in order to access this layer outside the circular membrane area for the sacrificial etch.

A larger sacrificial film thickness creates a larger gap and results in an overall a smaller sensitivity but a larger dynamic pressure range. A small sacrificial film thickness could result in more processing difficulties upon removal of the sacrificial layer but is advantageous to increase the capacitance between the parallel plate electrodes as high as possible.

The sacrificial layer deposition is followed by the deposition of a PECVD silicon nitride or silicon oxide capping layer 160 which functions as a passivation layer.

This particular film is typically 200-300 nm thick and serves as etch protection for the top electrode during the sacrificial layer etch. It should be as thin as possible and have preferably a dielectric constant larger than 4 to increase the capacitive coupling. A thin top metal electrode 162 (Al) is deposited on top. The top electrode 162 should be as thin as possible (i.e. 100-200nm) to decrease the thermal expansion coefficient of the membrane. The passivation layer 160 avoids electrical contact between the two metal layers.

The top electrode is patterned into multiple segments according to the present invention to optimize sensitivity, S/N ratio and allow differential capacitance measurements. The top electrode is then etched.

The electrode is then capped with a thick PECVD silicon nitride or oxide layer 164. The thickness and stress of this layer influences the final rigidity of the membrane. The stress in the SiNx:H layer can be tuned with the deposition conditions. Preferably the membrane diameter is optimized in order to define a certain pressure operating range for a given SiN membrane thickness. Typically the membrane thickness is chosen to be between 1.5um and 2.5 um for membrane diameters between 50-75 um which yield a sufficient broad dynamic pressure range between 0.5 and 5 bar. For low pressures (i.e <0.2 bar) the thickness of the membrane must be decreased to 300-500nm in order to create a much more flexible membrane.

In order to reduce the stress gradient the SiN thicknesses below and above the metal electrodes is adjusted so that the top electrode 162 is positioned in the middle of the membrane.

The process flow is continued with the patterning and dry etching of holes stopping on the sacrificial layer 158 as shown in Figure 19. These holes are placed circumferentially around the membrane i.e. outside the circular electrode area and are typically 1-2 um in diameter. The larger the hole diameter the easier the sacrificial material can be removed. The cavity is formed during sacrificial layer etch. The sacrificial 158 layer can be selectively removed with a PES etch (mixture of Phosphoric acid, Sulphuric acid, and Acetic acid).

After an anneal at 400°C-450°C to remove water and to remove excess of hydrogen form the SiNx:H membrane "Hot" PVD Al is deposited at 350°C chuck temperature. Upon using "Al-reflow" during the non-conformal Al deposition the etch holes will effectively seal the hole without a "seam" at PVD base pressure.

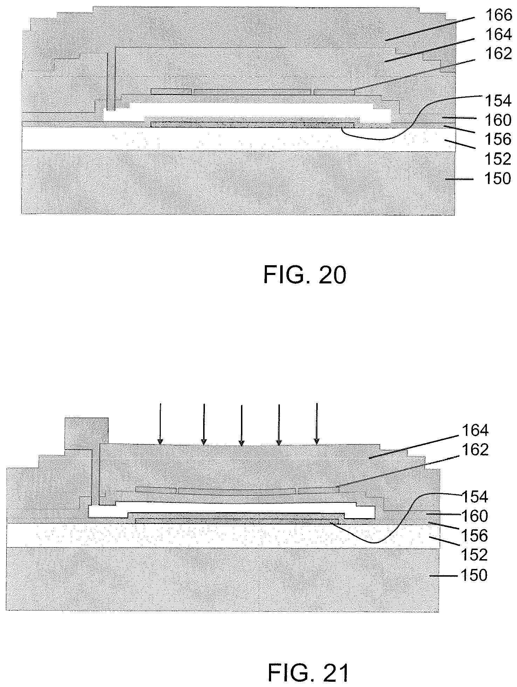

Figure 20 shows the aluminium etch hole sealing/plugging layer 166.

The required thickness of the etch hole sealing layer 166 for effective closure depends on the diameter of the hole and the gap diameter. For a large gap heights (e.g. >1um) in combination with large etch holes (e.g. 2um diameter) a rather thick Al layer (5um) is required for closure. Typical dimensions for the etch hole diameter is 1 um and 2 um for the Al plug layer thickness.

Al is then removed from the membrane by wet or dry etching using a mask (or without mask but then a timed etch is required). Depending on the membrane rigidity/thickness the membrane will be deflected due to vacuum inside cavity when the membrane is exposed to ambient pressure after the Al removal. The resulting structure is shown in Figure 21, in which a plug 168 remains,

Finally, electrical connections need to be fabricated to contact the segmented top and bottom electrodes. Electrical connections and bond pads are created by subsequent patterning, etching and deposition of Al using standard manufacturing methods.

It is particularly interesting to form the segmented electrode pressure sensor on top of an integrated circuit, such as CMOS circuit, so that a fully integrated solution results. One aspect of the invention makes use of the top metal layer of a CMOS circuit to enable the formation of interconnects so that electrical connections can be made to the different electrode segments without requiring cross overs.

By using the last interconnect metal level routing, access is made possible to true complete annular (i.e. circular or square or rectangular) bottom electrodes, which is not possible with bulk micromachining techniques because no crossovers are possible. More than two segments can be connected to the read-out circuitry in this way. The pressure sensor can be provided over the CMOS top passivation layer, and the integration on CMOS enables an increase in signal to noise ratio as well as a reduction in parasitic capacitances due to bond wires. It also enables the annular electrode rings to be formed without losing capacitance area for contact lines, and this applies even if many electrode segments are used. The resulting symmetry gives rise to uniform electrostatic actuation and a well-defined pressure/capacitance relationship. Access to the bottom electrodes is accomplished via the metal interconnect that is lying below the bottom electrode. Indeed, multiple interconnect levels of the underlying CMOS structure can be used to create the desired cross overs.

A number of process flows will now be described suitable for forming the pressure sensor over a CMOS circuit.

A first example is based on a SiGe flow, with an Al bottom electrode, PECVD SiC capping layer, a sacrificial oxide, SiGe top electrode and PECVD SiN sealing layer.

The process starts with the CMOS circuit, with its top metal interconnect covered with a PECVD SiN passivation layer (e.g. thickness 600nm).

A high density plasma (HDP) oxide is formed over the SiN layer, for example 1000nm thick.

Vias are patterned to the top metal interconnect layer through the oxide and passivation layer with a first mask. The vias can have diameter $0.7\mu m$. These are filled with tungsten by a CVD process, followed by a CMP planarization which stops on the HDP oxide.

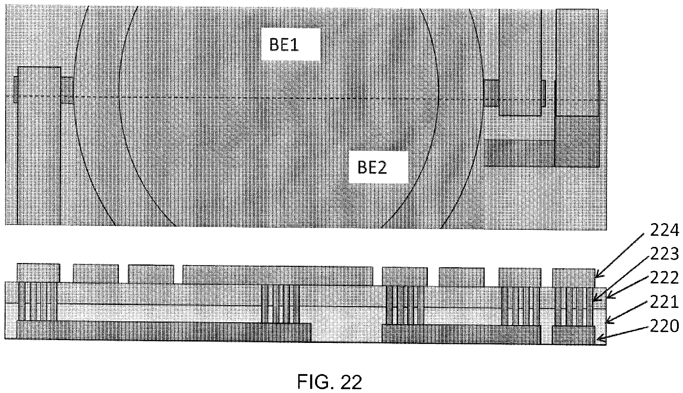

The bottom electrode is pattern is then formed from SiGe using a second mask. The resulting structure is shown in Figure 22, which shows the CMOS top metal layer 220, the SiN passivation layer 221, the HDP oxide 222, filled W vias 223 and patterned bottom electrode 224. The bottom electrode pattern has the electrodes as well as read out lines for each electrode.

The design shown is for a two-segment design, BE1, BE2. The additional outer segment is for supporting the anchors which hold the top and bottom electrodes apart. The top view in Figure 22 shows how the top CMOS interconnect layer enables each electrode to be coupled to a respective read out line, and all the read out lines and electrodes are formed in one layer with no cross overs.

A SiC layer is then formed on top of the bottom electrode to prevent shorts between the top and bottom electrodes and to avoid etching of the SiN passivation layer by the sacrificial HF vapour etch. The sacrificial SiO2 layer is then deposited, with typical thickness 0.5 to 1 $\mu m$. This defines the pressure sensor gap. The SiC layer can optionally be planarized first with an oxide fill and CMP process which stops on the SiC layer.

Anchor structures are then formed by patterning vias with a third mask. The vias can again have dimension $0.7\mu m$, and extend through the sacrificial oxide and the SiC layer to make contact with the outermost bottom electrode.

The top electrode is then deposited using a one or two step SiGe deposition. A first process fills the anchor vias (e.g. 400nm SiGe at 400 degrees C for 30 minutes) and a second can be used to increase the thickness.

The top SiGe electrode is then patterned. A first pattern (a fourth mask) is used to define separate bond pads, and a second pattern (a fifth mask) is used to form the sacrificial etch openings to the pressure sensor cavity.

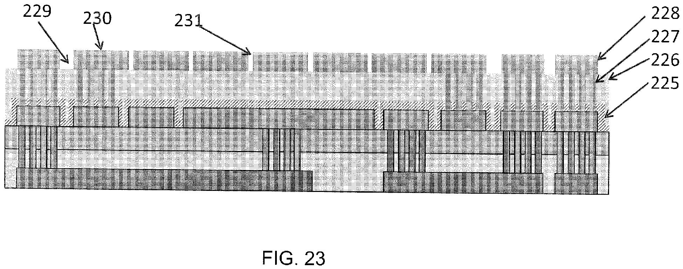

The resulting structure is shown in Figure 23. The SiC layer is shown as 225, the sacrificial SiO2 layer is shown as 226, the filled anchor vias are shown as 227 and the patterned top electrode is shown as 228. There are wider spaces 229 between the bond pad electrodes 230 than the sacrificial etch openings 231. Small holes are required for the sacrificial etch, for example 0.5 $\mu m$ to 0.7 $\mu m$ to allow closure during a sealing step.

Al contact pad electrodes are then patterned (mask 6) and the sacrificial etch then takes place. A capping layer is then formed for example TEOS or SiN or SiC with a thickness 1 to 2 $\mu m$. This capping layer determines the base pressure and outgassing performance. Openings are needed to the contact pad electrodes.

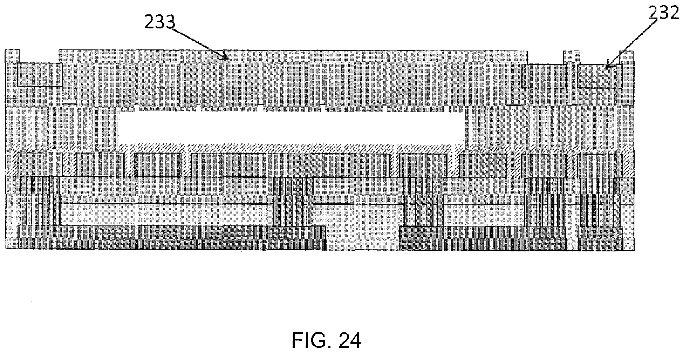

The resulting structure is shown in cross section in Figure 24. The Al contact pad electrodes are shown as 232 and the capping layer is shown as 233.

The SiGe films can be deposited on top of a CMOS circuit at 400C without degradation of metal line resistance/transistor performance. Stable SiGe films do not show creep and have well controlled bending deflection profile (low tensile stress). There is a small thermal expansion coefficient mismatch of SiGe electrodes to Si so that buckling can be avoided and there is a low temperature sensitivity of membrane. The thin PECVD SiC layer on top of bottom electrode gives good dielectric isolation, and the device can be operated in collapse (no shorts between top and bottom). The small pressure sensor performance is spread over the wafer, and the membrane thickness and cavity height have good uniformity (these heights are deposition controlled and not CMP controlled).

An alternative process flow makes use of a tungsten top electrode.

Up to and including the patterning of the anchor vias in the sacrificial oxide layer, the process is the same as described above.

Instead of forming a SiGe top electrode, W is formed by a CVD process. This has a well-controlled gap height so that no CMP process is needed. W has a low CTE mismatch and high stress, which avoids buckling during the high temperature sealing step.

The patterning of the W layer is as above, with a two-mask process to form the structure of Figure 23, but the top electrode pattern 228 is W instead of SiGe. The process flow then continues as described above.

In addition to the advantages outlined above, this process takes advantage of the small thermal expansion coefficient mismatch of W electrodes to Si to avoid bucking and to give a low temperature sensitivity of the membrane. It also avoids the need for SiGe tools so gives a lower captial expenditure.

An alternative process flow makes use of an aluminium top electrode.

Again, up to and including the patterning of the anchor vias in the sacrificial oxide layer, the process is the same as described above.

Instead of forming a SiGe top electrode, W is formed by a CVD process but only to fill the anchor vias. A CMP process is then carried out.

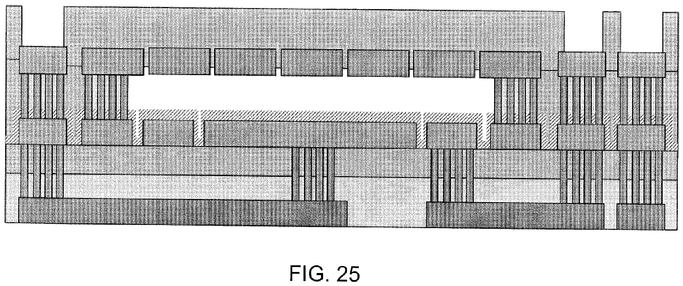

The Al top electrode material is then deposited with a process at the highest possible stress to avoid buckling. The patterning of the Al layer is as above, with a two-mask process to form the structure of Figure 23, but the top electrode pattern 228 comprises W anchors and an Al top layer. The process flow then continues as described above. However, the contact pad electrodes 232 are not required, so that there is one less mask step. The resulting structure is shown in Figure 25, which corresponds to Figure 24 but shows that the additional Al contact pads are not needed.

In addition to the advantages outlined above, this processing is closer to standard CMOS processing. All films can be deposited on top of CMOS at temperatures below 400°C with no degradation of metal line resistance/transistor performance. Again, no SiGe tools are required, and there is mask layer less.

There are variations to the process flow using aluminium top electrode.

For example, a SiN layer can be provided over the bottom electrode instead of SiC, again to prevent shorts between the top and bottom electrode. This anti-shorting layer can instead be provided on top of the sacrificial oxide layer, or there may be a SiN layer both beneath and above the sacrificial etch oxide. One of these layers can be patterned to device anti-stiction bumps.

When a SiN layer is provided on top of the sacrificial oxide layer, it can become a support layer for the aluminium top electrode to avoid buckling.

For maximum displacement, the most robust shape against a large stress gradient is a circular membrane plate, but hexagonal, square or rectangular shapes are also possible.

The device can be packaged in a way which keeps the membrane sensor area free in order to allow deflection of the membrane and detect the pressure changes. For this purpose, a non sticking foil can be applied over the die and a plunger larger than the size of the membrane is pushed against the die when the molding compound is injected at high pressure in the packaging mould.

When the plunger and the mould are released, the foil is removed from membrane. The plunger protects the membrane against the high pressure and the deposition of moulding compound onto the membrane.

The segmented electrode design of the invention enables a smaller device, allowing self-calibration with improved signal-to-noise ratio and tuneable sensitivity. It also allows the use of a differential capacitance measurement to find a predefined deflection state. If this predefined deflection state is well known the actual device performance can be modelled more accurately. This then enables an absolute measurement of membrane deflection. Moreover, it allows for calibration to correct for signal drift, can perform capacitance measurement in either high sensitive and linear regime and increases the total dynamic range significantly.

The use of a smaller central electrode is beneficial for an improved signal to noise ratio to detect small pressure variations, and a DC bias can be used to tune the sensitivity to a desired range.

The method of sealing the cavity in the process above can operate at low pressure. The use of a Physical Vapour Deposited (PVD) metallic plug is beneficial to reduce base pressure and avoids undesired pressure variations in the cavity due to thermal expansion of the gas. Using LPCVD or PECVD for the cavity sealing step results in a relative large and uncontrolled base pressure inside the cavity. By placing the etch holes outside the membrane area, this requires a much better selectivity of the sacrificial layer etch. Upon using a metallic sacrificial layer (Mo, Al, or Cr) a much better selectivity can be obtained against silicon oxide and/or silicon nitride capping layers.

The invention uses a capacitive read-out system for the pressure sensor. This has clear advantages compared to piezo resistive read-out systems. Compared to a capacitive read-out a piezo resistive read-out consumes more power and is more temperature sensitive for a given size and signal to noise ratio. Moreover, the latter is relatively large, lacks integration flexibility and can not be constructed on top of CMOS.

Many other advantages of the sensor of the invention are outlined above. Some of these are summarised below.

The membrane can be forced into the zero deflection state at a certain pressure using a voltage applied to one of the segmented electrodes. Instead of measuring the capacitance change due to membrane deflection, the membrane deflection can be kept in a certain deflected state upon applying a bias voltage to the outer or inner electrode: The bias voltage is then a measure for the pressure difference between cavity and outer world. This approach is insensitive to variations in stress in the movable electrode arrangement (the membrane).

Improved sensitivity is made possible due to the use of a small inner electrode having a larger deflection amplitude than the outer electrode. This improves the signal to noise ratio.

The ability to provide a bias voltage can also be used for other purposes. For example, deflection due to thermal expansion of the cavity can be compensated for, by applying a voltage bias to the outer electrode and using a temperature sensor to obtain the temperature, which is then used to derive the required compensating voltage bias.

A large dynamic pressure measurement range is enabled that can be calibrated using different voltage set points. The use of multiple sensor electrodes also enables the touch point pressure to be accurately determined using a differential capacitance measurement. This then enables the sensor to be switched to a different measuring range. The two measuring ranges comprise a linear variation of capacitance with pressure and a highly sensitive, but non-linear change in capacitance with pressure. The sensor can also be deliberately pulled into collapse to create a linear pressure-capacitance read-out.

The membrane can also be brought into resonance by applying an electrostatic field to the outer electrode for example. The problem of using the method of resonance frequency peak broadening is that at large pressures i.e. >0.1 bar the Q factor becomes low which makes pressure measurements inaccurate at ambient pressures. Instead of determining the Q-factor of the peak resonance, the resulting oscillations in capacitance can now be accurately determined via the inner electrode. This will expand the measuring range for the resonance based method.

The main examples above use two electrodes, but there may be three (as also shown above) or more electrodes in the segmented electrode arrangement. In the description and claims, reference to an inner electrode and an outer electrode thus should be understood as referring to both electrodes in a two-electrode design, or referring to any pair of electrodes in a design with three or more concentric electrodes.

The invention is of particular interest for use in consumer applications like mobile phones (built next to the microphone), weather stations, GPS assist, watches, etc. It can be used in automotive applications like tyre pressure monitoring systems, in smart building applications (HVAC, air flow measurements, pressure drop over air filters), and in medical applications.

The invention applies to electrode configurations where at least one electrode arrangement comprises at least two segments. There may be more segments, for example 3 or 4.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

**Claims**

1. A MEMS pressure sensor comprising:

   - a substrate (150) with an integrated circuit having metal interconnects including a top metal interconnect layer (220) including connection portions of the top metal interconnect layer,
   - a bottom electrode arrangement (154, 224), and a deformable membrane suspended above said bottom electrode arrangement (154, 224), and
   - a top electrode arrangement (162, 228) comprising an inner electrode (50) and an outer electrode (52) arranged around the inner electrode (50),

   **characterized in that**

   - a passivation layer (221) is arranged above the top metal interconnect layer (220),
   - an oxide layer (222) is arranged above the passivation layer (221),

- the bottom electrode arrangement (154, 224) is stationary and is formed in a metal layer arranged on the oxide layer (222),
- the top electrode arrangement (162, 228) is applied to the membrane, the top electrode arrangement (162, 228) being formed in a further metal layer, and
- vertical vias (223) extend through the oxide layer (222) and the passivation layer (221), the vertical vias (223) electrically connecting the inner electrode (50) and the outer electrode (52) and the bottom electrode arrangement (162, 228) to the connection portions of the top metal interconnect layer (220).

2. A sensor as claimed in claim 1, wherein the means for deriving an output is configurable to measure independently the capacitance associated with the inner electrode (50) and the outer electrode (52).

3. A sensor as claimed in claim 1 or 2, wherein the inner electrode (50) is circular, square, or rectangular and the outer electrode (52) is annular, and they have the same area.

4. A sensor as claimed in any preceding claim, further comprising means for applying a voltage bias to the inner or outer electrode, and wherein the other electrode is used for capacitance measurement.

5. A sensor as claimed in any one of claims 1 to 3, further comprising means for applying a voltage bias to the inner (50) or outer (52) electrode, and further comprising a feedback system for maintaining a fixed ratio between the capacitance associated with the inner electrode and the outer electrode such as to maintain the suspended electrode arrangement in a predefined deflection configuration.

6. A sensor as claimed in any one of claims 1 to 3, wherein the means for deriving an output is configurable to enable the output to be derived from any of:

the capacitance associated with the inner electrode (50) alone;
the capacitance associated with the outer electrode (52) alone;
the combined capacitances associated with the inner and outer electrodes (50,52).

7. A method of fabricating a MEMS pressure sensor, comprising:

- providing an integrated circuit having a top metal interconnect layer (220) including connection portions of the top metal interconnect layer;
- arranging a passivation layer (221) above the top metal interconnect layer (220);
- arranging an oxide layer (222) above the passivation layer (221);
- forming vertical vias (223) through the oxide layer (222) and the passivation layer (221);
- applying a metal layer on the oxide layer (222) and forming a stationary bottom electrode arrangement (154, 224) in the metal layer, so that the vertical vias (223) electrically connect the bottom electrode arrangement (154, 224) to the connection portions of the top metal interconnect layer (220); and
- suspending a deformable membrane carrying a further metal layer above the bottom electrode arrangement (154, 224), the further metal layer forming a top electrode arrangement (162, 228) including an inner electrode (50) and an outer electrode (52) arranged around the inner electrode, such that the vertical vias (223) electrically connect the inner electrode (50) and the outer electrode (42) to the connection portions of the top metal interconnect layer (220).

8. A method as claimed in claim 7, comprising:

- forming a lower metal layer (154) over the integrated circuit and defining the lower electrode arrangement;
- forming a sacrificial layer (158) over the lower metal layer to define the cavity;
- forming a passivation layer (160) over the sacrificial layer;
- forming a top metal layer (162) and defining the other electrode arrangement, wherein the passivation layer (160) avoids electrical contact between the lower metal layer and the top metal layer;
- forming a capping layer (164) over the top metal layer;
- forming an etch opening in the capping layer (164) leading to the sacrificial layer (158);
- removing the sacrificial layer (158) through the etch opening;
- forming a plugging layer (166) for plugging the etch opening; and
- removing the plugging layer (166) other than over the etch opening.

9. A method as claimed in claim 7, comprising:

  - forming a lower metal layer (224) over the integrated circuit and defining the lower electrode arrangement;
  - forming a passivation layer (225) over the sacrificial layer;
  - forming a sacrificial layer (226) over the lower metal layer to define the cavity;
  - forming a top metal layer (228) and defining the other electrode arrangement, wherein the passivation layer (225) avoids electrical contact between the lower metal layer and the top metal layer;
  - forming an etch opening (231) in the top metal layer (228) leading to the sacrificial layer (225);
  - removing the sacrificial layer (225) through the etch opening;
  - forming a plugging layer (233) for plugging the etch opening.

**Patentansprüche**

1. MEMS-Drucksensor, Folgendes umfassend:

  - ein Substrat (150) mit einer integrierten Schaltung, die Metallverschaltungen hat, die eine obere Metallverschaltungsschicht (220) umfasst, die Verbindungsabschnitte der oberen Metallverschaltungsschicht enthält,
  - eine untere Elektrodenanordnung (154, 224) und eine verformbare Membran, die über der unteren Elektrodenanordnung (154, 224) aufgehängt ist,
  - eine obere Elektrodenanordnung (162, 228), die eine innere Elektrode (50) und eine äußere Elektrode (52) aufweist, die um die innere Elektrode (50) herum angeordnet ist,

  **dadurch gekennzeichnet, dass**

  - eine Passivierungsschicht (221) über der oberen Metallverschaltungsschicht (220) angeordnet ist,
  - eine Oxidschicht (222) über der Passivierungsschicht (221) angeordnet ist,
  - die untere Elektrodenanordnung (154, 224) ortsfest und in einer Metallschicht ausgebildet ist, die auf der Oxidschicht (222) angeordnet ist,
  - die obere Elektrodenanordnung (162, 228) an der Membran angebracht ist, wobei die obere Elektrodenanordnung (162, 228) in einer weiteren Metallschicht ausgebildet ist, und
  - sich vertikale Durchkontaktierungen (223) durch die Oxidschicht (222) und die Passivierungsschicht (221) erstrecken, wobei die vertikalen Durchkontaktierungen (223) die innere Elektrode (50) und die äußere Elektrode (52) und die untere Elektrodenanordnung (162, 228) elektrisch mit den Verbindungsabschnitten der oberen Metallverschaltungsschicht (220) verbinden.

2. Sensor nach Anspruch 1, wobei die Einrichtung zum Ableiten einer Ausgabe konfigurierbar ist, um unabhängig die der inneren Elektrode (50) und der äußeren Elektrode (52) zugehörige Kapazität zu messen.

3. Sensor nach Anspruch 1 oder 2, wobei die innere Elektrode (50) kreisförmig, quadratisch oder rechteckig ist, und die äußere Elektrode (52) ringförmig ist, und sie dieselbe Fläche haben.

4. Sensor nach einem beliebigen vorhergehenden Anspruch, darüber hinaus ein Mittel umfassend, um einen Spannungs-Bias an die innere oder äußere Elektrode anzulegen, und wobei die andere Elektrode zur Kapazitätsmessung verwendet wird.

5. Sensor nach einem der Ansprüche 1 bis 3, darüber hinaus ein Mittel umfassend, um einen Spannungs-Bias an die innere (50) oder äußere (52) Elektrode anzulegen, und darüber hinaus ein Rückkopplungssystem umfassend, um ein festes Verhältnis zwischen der der inneren Elektrode und der äußeren Elektrode zugehörenden Kapazität so aufrechtzuerhalten, dass die aufgehängte Elektrodenanordnung in einer vorgegebenen Ablenkungskonfiguration gehalten wird.

6. Sensor nach einem der Ansprüche 1 bis 3, wobei das Mittel zum Ableiten einer Ausgabe konfigurierbar ist, um zu ermöglichen, dass die Ausgabe abgeleitet wird von:

  der Kapazität, die der inneren Elektrode (50) allein zugehörig ist; oder
  der Kapazität, die der äußeren Elektrode (52) allein zugehörig ist; oder
  den kombinierten Kapazitäten, die der inneren und äußeren Elektrode (50, 52) zugehörig sind.

**7.** Verfahren zum Herstellen eines MEMS-Drucksensors, Folgendes umfassend:

- Bereitstellen einer integrierten Schaltung, die eine obere Metallverschaltungsschicht (220) umfasst, die Verbindungsabschnitte der oberen Metallverschaltungsschicht enthält,
- Anordnen einer Passivierungsschicht (221) über der oberen Metallverschaltungsschicht (220);
- Anordnen einer Oxidschicht (222) über der Passivierungsschicht (221);
- Ausbilden von vertikalen Durchkontaktierungen (223) durch die Oxidschicht (222) und die Passivierungsschicht (221) hindurch;
- Aufbringen einer Metallschicht auf die Oxidschicht (222) und Ausbilden einer ortsfesten unteren Elektrodenanordnung (154, 224) in der Metallschicht, und zwar so, dass die vertikalen Durchkontaktierungen (223) die untere Elektrodenanordnung (154, 224) elektrisch mit den Verbindungsabschnitten der oberen Metallverschaltungsschicht (220) verbinden; und
- Aufhängen einer eine weitere Metallschicht tragenden verformbaren Membran über der unteren Elektrodenanordnung (154, 224), wobei die weitere Metallschicht eine obere Elektrodenanordnung (162, 228) bildet, die eine innere Elektrode (50) und eine um die innere Elektrode herum angeordnete äußere Elektrode (52) enthält, so dass die vertikalen Durchkontaktierungen (223) die innere Elektrode (50) und die äußere Elektrode (52) elektrisch mit den Verbindungabschnitten der oberen Metallverschaltungsschicht (220) verbinden.

**8.** Verfahren nach Anspruch 7, Folgendes umfassend:

- Ausbilden einer unteren Metallschicht (154) über der integrierten Schaltung und Definieren der unteren Elektrodenanordnung;
- Ausbilden einer Opferschicht (158) über der unteren Metallschicht, um den Hohlraum zu definieren;
- Ausbilden einer Passivierungsschicht (160) über der Opferschicht;
- Ausbilden einer oberen Metallschicht (162) und Definieren der anderen Elektrodenanordnung, wobei die Passivierungsschicht (160) elektrischen Kontakt zwischen der unteren Metallschicht und der oberen Metallschicht vermeidet;
- Ausbilden einer Deckelungsschicht (164) über der oberen Metallschicht;
- Ausbilden einer Ätzöffnung in der Deckelungsschicht (164), die zur Opferschicht (158) führt;
- Entfernen der Opferschicht (158) durch die Ätzöffnung hindurch;
- Ausbilden einer Verstopfungsschicht (166), um die Ätzöffnung zu verstopfen; und
- Entfernen der Verstopfungsschicht (166), außer über der Ätzöffnung.

**9.** Verfahren nach Anspruch 7, Folgendes umfassend:

- Ausbilden einer unteren Metallschicht (224) über der integrierten Schaltung und Definieren der unteren Elektrodenanordnung;
- Ausbilden einer Passivierungsschicht (225) über der Opferschicht;
- Ausbilden einer Opferschicht (226) über der unteren Metallschicht, um den Hohlraum zu definieren;
- Ausbilden einer oberen Metallschicht (228) und Definieren der anderen Elektrodenanordnung, wobei die Passivierungsschicht (225) elektrischen Kontakt zwischen der unteren Metallschicht und der oberen Metallschicht vermeidet;
- Ausbilden einer Ätzöffnung (231) in der oberen Metallschicht (228), die zur Opferschicht (225) führt;
- Entfernen der Opferschicht (225) durch die Ätzöffnung hindurch;
- Ausbilden einer Verstopfungsschicht (233), um die Ätzöffnung zu verstopfen.

## Revendications

**1.** Capteur de pression MEMS comprenant:

- un substrat (150) avec un circuit intégré comportant des interconnexions métalliques incluant une couche d'interconnexion métallique supérieure (220) incluant des parties de connexion de la couche d'interconnexion métallique supérieure,
- un agencement d'électrodes inférieur (154, 224), et une membrane déformable suspendue au-dessus dudit agencement d'électrode inférieur (154, 224),
- un agencement d'électrodes supérieur (162, 228) comprenant une électrode intérieure (50) et une électrode extérieure (52) agencée autour de l'électrode intérieure (50),

**caractérisé en ce que**

- une couche de passivation (221) est agencée au-dessus de la couche d'interconnexion métallique supérieure (220),
- une couche d'oxyde (222) est agencée au-dessus de la couche de passivation (221),
- l'agencement d'électrodes inférieur (154, 224) est fixe et est formé dans une couche métallique agencée sur la couche d'oxyde (222),
- l'agencement d'électrodes supérieur (162, 228) est appliqué à la membrane, l'agencement d'électrodes supérieur (162, 228) étant formé dans une couche métallique supplémentaire, et
- des traversées verticales (223) s'étendent à travers la couche d'oxyde (222) et la couche de passivation (221), les traversées verticales (223) connectant électriquement l'électrode intérieure (50) et l'électrode extérieure (52) et l'agencement d'électrodes inférieur (162, 228) aux parties de connexion de la couche d'interconnexion métallique supérieure (220).

2. Capteur tel que revendiqué dans la revendication 1, sachant que les moyens de dérivation d'une sortie sont configurables pour mesurer indépendamment la capacitance associée à l'électrode intérieure (50) et à l'électrode extérieure (52).

3. Capteur tel que revendiqué dans la revendication 1 ou 2, sachant que l'électrode intérieure (50) est circulaire, carrée, ou rectangulaire et l'électrode extérieure (52) est annulaire, et qu'elles ont la même aire.

4. Capteur tel que revendiqué dans une quelconque revendication précédente, comprenant en outre des moyens d'application d'une polarisation de tension à l'électrode intérieure ou extérieure, et sachant que l'autre électrode est utilisée pour une mesure de capacitance.

5. Capteur tel que revendiqué dans l'une quelconque des revendications 1 à 3, comprenant en outre des moyens d'application d'une polarisation de tension à l'électrode intérieure (50) ou extérieure (52), et comprenant en outre un système de rétroaction destiné à maintenir un rapport fixe entre la capacitance associée à l'électrode intérieure et à l'électrode extérieure de façon à maintenir l'agencement d'électrodes suspendu dans une configuration de déflexion prédéfinie.

6. Capteur tel que revendiqué dans l'une quelconque des revendications 1 à 3, sachant que les moyens de dérivation d'une sortie sont configurables pour permettre à la sortie d'être dérivée de l'une quelconque de:

la capacitance associée à l'électrode intérieure (50) uniquement;
la capacitance associée à l'électrode extérieure (52) uniquement;
les capacitances combinées associées aux électrodes intérieure et extérieure (50, 52).

7. Procédé de fabrication d'un capteur de pression MEMS, comprenant:

- la fourniture d'un circuit intégré comportant une couche d'interconnexion métallique supérieure (220) incluant des parties de connexion de la couche d'interconnexion métallique supérieure;
- l'agencement d'une couche de passivation (221) au-dessus de la couche d'interconnexion métallique supérieure (220);
- l'agencement d'une couche d'oxyde (222) au-dessus de la couche de passivation (221);
- la formation de traversées verticales (223) à travers la couche d'oxyde (222) et la couche de passivation (221);
- l'application d'une couche métallique sur la couche d'oxyde (222) et la formation d'un agencement d'électrodes inférieur (154, 224) fixe dans la couche métallique, de façon que les traversées verticales (223) connectent électriquement l'agencement d'électrodes inférieur (154, 224) aux parties de connexion de la couche d'interconnexion métallique supérieure (220); et
- la suspension d'une membrane déformable portant une couche métallique supplémentaire au-dessus de l'agencement d'électrodes inférieur (154, 224), la couche métallique supplémentaire formant un agencement d'électrodes supérieur (162, 228) incluant une électrode intérieure (50) et une électrode extérieure (52) agencée autour de l'électrode intérieure, de telle sorte que les traversées verticales (223) connectent électriquement l'électrode intérieure (50) et l'électrode extérieure (52) aux parties de connexion de la couche d'interconnexion métallique supérieure (220).

8. Procédé tel que revendiqué dans la revendication 7, comprenant:

- la formation d'une couche métallique inférieure (154) sur le circuit intégré et la définition de l'agencement d'électrodes inférieur;
- la formation d'une couche sacrificielle (158) sur la couche métallique inférieure pour définir la cavité;
- la formation d'une couche de passivation (160) sur la couche sacrificielle;
- la formation d'une couche métallique supérieure (162) et la définition de l'autre agencement d'électrodes, sachant que la couche de passivation (160) empêche un contact électrique entre la couche métallique inférieure et la couche métallique supérieure;
- la formation d'une couche de recouvrement (164) sur la couche métallique supérieure;
- la formation d'une ouverture par gravure dans la couche de recouvrement (164), menant à la couche sacrificielle (158) ;
- l'enlèvement de la couche sacrificielle (158) via l'ouverture par gravure;
- la formation d'une couche de colmatage (166) destinée à colmater l'ouverture par gravure; et
- l'enlèvement de la couche de colmatage (166) ailleurs que sur l'ouverture par gravure.

9. Procédé tel que revendiqué dans la revendication 7, comprenant:

- la formation d'une couche métallique inférieure (224) sur le circuit intégré et la définition de l'agencement d'électrodes inférieur;
- la formation d'une couche de passivation (225) sur la couche sacrificielle;
- la formation d'une couche sacrificielle (226) sur la couche métallique inférieure pour définir la cavité;
- la formation d'une couche métallique supérieure (228) et la définition de l'autre agencement d'électrodes, sachant que la couche de passivation (225) empêche un contact électrique entre la couche métallique inférieure et la couche métallique supérieure;
- la formation d'une ouverture par gravure (231) dans la couche métallique supérieure (228), menant à la couche sacrificielle (225);
- l'enlèvement de la couche sacrificielle (225) via l'ouverture par gravure;
- la formation d'une couche de colmatage (233) destinée à colmater l'ouverture par gravure.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

$\Delta C_{in}$

$V_{bias,3}$

FIG. 15

$C_{outer}$    $C_{center}$

$C = C_{in} - C_{out} = 0$

FIG. 16

FIG. 17

FIG. 18

FIG. 19

166
164
162
154
160
156
152
150

FIG. 20

164
162
154
160
156
152
150

FIG. 21

BE1

BE2

224
223
222
221
220

FIG. 22

229    230    231                                          228
                                                          227
                                                          226
                                                          225

FIG. 23

FIG. 24

FIG. 25

**EP 2 520 918 B1**

**REFERENCES CITED IN THE DESCRIPTION**

**Patent documents cited in the description**

- US 20040182165 A
- US 20020011114 A